# EUROPÄISCHE PATENTSCHRIFT

(11) **EP 2 780 491 B1**
(45) Veröffentlichungstag und Bekanntmachung des Hinweises auf die Patenterteilung: **28.10.2015**
(21) Anmeldenummer: 13702412.1
(22) Anmeldetag: 25.01.2013
(51) Int. Cl.: C25B 1/10, C25B 15/08

(54) **VERFAHREN ZUM BETRIEB EINES ELEKTROLYSESYSTEMS**
METHOD FOR OPERATING AN ELECTROLYSIS SYSTEM
PROCÉDÉ PERMETTANT DE FAIRE FONCTIONNER UN SYSTÈME D'ÉLECTROLYSE

(30) Priorität: 02.02.2012 EP 12153648
(43) Veröffentlichungstag der Anmeldung: 24.09.2014
(73) Patentinhaber: Siemens Aktiengesellschaft, 80333 München (DE)
(72) Erfinder: HAMMER, Thomas, 91334 Hemhofen (DE); MOST, Dieter, 91052 Erlangen (DE); SCHÄFER, Jochen, 90408 Nürnberg (DE); TACKENBERG, Martin, 91301 Forchheim (DE); DATZ, Armin, 91099 Poxdorf (DE); DENNERLEIN, Klaus, 91058 Erlangen (DE); HUBER, Norbert, 91056 Erlangen (DE); REINER, Andreas, 91083 Baiersdorf (DE); STRAUB, Jochen, 91054 Erlangen (DE); STRAUB, Werner, 91093 Hessdorf (DE)
(86) Internationale Anmeldenummer: PCT/EP2013/051471
(87) Internationale Veröffentlichungsnummer: WO 2013/113631

(56) Entgegenhaltungen:
- EP-A2- 0 084 815
- CH-A- 137 203
- US-A- 4 490 232
- US-A1- 2006 053 792
- US-A1- 2009 322 090

## Beschreibung

Die Erfindung betrifft ein Verfahren zum Betrieb eines Elektrolysesystems zum Erzeugen von Wasserstoff und Sauerstoff durch Zerlegung von Wasser.

Die Zerlegung von Wasser zu Wasserstoff und Sauerstoff mittels Elektrolyse eröffnet die Möglichkeit Strom in Form von Wasserstoff oder Sauerstoff zu speichern. Die eingebrachte elektrische Energie findet sich nach der Umsetzung zum größten Teil in der chemischen Energie der Produkte Wasserstoff und Sauerstoff wieder. Jedoch entstehen im Elektrolyseprozess neben den Produkten Wasserstoff und Sauerstoff auch Verluste, die in Form von Reaktionswärme anfallen.

Der Elektrolyseprozess wird mit Frischwasser versorgt, wobei es sich in der Regel um vollentsalztes, insbesondere destilliertes Wasser handelt. Um eine Bedeckung der Elektrodenoberfläche des Elektrolyseurs mit Mineralien und sonstige Verunreinigungen zu verhindern, wird selbst Leitungswasser vor der Zufuhr zum Elektrolyseur gereinigt und deionisiert. Um Korrosion und Katalysatordeaktivierung zu vermeiden, darf im Wasser außerdem kein Chlorid enthalten sein. Beim Betrieb des Elektrolyseurs wird das deionisierte Prozesswasser nur teilweise zerlegt, ein Großteil des Prozesswassers verbleibt in einem Prozesswasserkreislauf. Es muss jedoch zusätzliches deionisiertes Wasser nachgeliefert werden, um den Verbrauch am Prozesswasser im Elektrolyseur zu kompensieren.

Deionisiertes Wasser, welches in einem Elektrolyseur als Prozesswasser verwendet wird, muss vorher aus einer Rohwasserquelle (z.B. Leitungswasser, Flusswasser, See- aber auch Meer- oder Brackwasser) gewonnen werden. Je nach Zugang zu einer hochwertigen oder einer minderwertigen Wasserquelle geschieht dies mit hohen energetischen Kosten und apparativem Aufwand. Dies mindert den Gesamtwirkungsgrad des Elektrolyseprozesses.

Die Aufbereitung des für die Wasserstoffproduktion durch Elektrolyse benötigten Wassers erfolgt im Allgemeinen getrennt vom eigentlichen Elektrolyseprozess und wird daher auch für gewöhnlich nicht bei der Betrachtung des Wirkungsgrades des Elektrolyseprozesses berücksichtigt. Wenn ein Teil der Wasseraufbereitung außerhalb der Elektrolyseanlage erfolgt, z.B. indem Trinkwasser aus von den lokalen Stadtwerken betriebenen Trinkwasserleitungen verwendet wird, muss für dieses hochkonditionierte Wasser ein im Vergleich zur Entnahme z.B. von Flusswasser erhöhter Preis bezahlt werden. Die energetischen Kosten laufen dann beim Betreiber der Trinkwasseraufbereitung auf, anstatt in den Gesamtwirkungsgrad eingerechnet zu werden.

Der Energieverbrauch zur Bereitstellung des deionisierten und entsalzten Wassers mindert die Effizienz des Elektrolyseprozesses. Es wird dabei entweder Trinkwasser verwendet oder dort wo kein Trinkwasser verfügbar ist, müssen entsprechende Anlagen zur Aufbereitung von minderwertigem Rohwasser bereitgestellt werden. Beides erhöht die Kosten des Elektrolyseprozesses. In diesem Zusammenhang gilt es zu beachten, dass während der Elektrolyse erhebliche Mengen an elektrischer Energie in Wärmeenergie/Abwärme umgewandelt werden, die zurzeit größtenteils ungenutzt abgeführt werden.

Aus der DE 10 2005 011 316 A1 ist es beispielsweise bekannt, die Wärme der im Elektrolyseur erzeugten Wasserstoff- und Sauerstoffströme an das für die Elektrolyse benötigte Wasser zum Vorwärmen abzugeben.

Der Erfindung liegt die Aufgabe zugrunde, die Effizienz eines Elektrolyseprozesses zu steigern.

Die Aufgabe wird erfindungsgemäß gelöst durch ein Verfahren zum Betrieb eines Elektrolysesystems zum Erzeugen von Wasserstoff und Sauerstoff durch Zerlegung von Wasser in einem PEM-Elektrolyseur, wobei
- dem PEM-Elektrolyseur Prozesswasser zugeführt wird,
- Abwärme, die im PEM-Elektrolyseur beim Zerlegen des Prozesswassers erzeugt wird, in einem Wärmeträgermedium gespeichert wird,
- das Wärmeträgermedium einer Niedertemperatur-Destillationsanlage zugeführt wird, und
- in der Niedertemperatur-Destillationsanlage mittels der Abwärme aus Rohwasser deionisiertes Wasser unter Atmosphärendruck bei Betriebstemperaturen zwischen 60° und 70° hergestellt wird, wobei
- lediglich ein Teil, insbesondere weniger als 50% des deionisierten Wassers als Prozesswasser dem PEM-Elektrolyseur zugeführt wird, und
- ein Industriewasserstrom, der insbesondere mehr als 50% des deionisierten Wassers umfasst, nach der Niedertemperatur-Destillationsanlage und vor dem PEM-Elektrolyseurs aus dem Elektrolysesystem hinausgeleitet wird.

Unter Niedertemperatur-Destillationsanlage wird hierbei eine Wasseraufbereitungsanlage verstanden, bei der die Herstellung von destilliertem Wasser bei Temperaturen unter 100°C erfolgt. Ein solcher auf Verdunstung (d.h. der Prozess findet unterhalb der Siedetemperatur statt) und Rekondensation basierende Prozess ist z.B. in der DE 10 2008 051 731 A1 beschrieben.

Mit Prozesswasser wird hierbei destilliertes Wasser bezeichnet, welches dem PEM-Elektrolyseur zum Zerlegen in Wasserstoff und Sauerstoff zugeführt wird. Das Prozesswasser kann sowohl frisch destilliertes Wasser als auch Wasser, welches nach dem Durchlauf durch den PEM-Elektrolyseur nicht verbraucht wurde und erneut in den PEM-Elektrolyseur hineingeleitet wird, umfassen.

Mit Industriewasserstrom wird hierbei Wasser bezeichnet, welches in der Niedertemperatur-Destillationsanlage aufbereitet wird, jedoch nicht als Prozesswasser dem PEM-Elektrolyseur zugeführt wird. Der Industriewasserstrom ist i. d. R. größer als der Strom des in der Niedertemperatur-Destillationsanlage produzierten Prozesswassers, insbesondere beträgt der Industriewasserstrom mehr als 50% des in der Niedertemperatur-Destillationsanlage destillierten Wassers. Der Industriewasserstrom wird aus dem Elektrolysesystem hinausgeleitet und unbehandelt oder nach weiteren Aufbereitungsschritten in einem industriellen Prozess, in der Landwirtschaft oder als Trinkwasser verwendet.

Die Zerlegung von Wasser erfolgt durch eine Membran-Elektroden-Einheit (MAE - engl. membrane electrode assembly) im PEM-Elektrolyseur. Die darin enthaltene Membran zeichnet sich durch ihre Protonenleitfähigkeit (PEM - engl. protone exchange membrane) aus. Ein PEM-Elektrolyseur arbeitet bei einer Temperatur zwischen 50°C und 130°C, typischerweise in einem Temperaturbereich zwischen 70°C und 90°C. Auf diesem Temperaturniveau kann die Abwärme des Elektrolyseprozesses direkt benutzt werden, um die thermisch betriebene Wasseraufbereitungsanlage zu "befeuern". Entsprechend beträgt die Temperatur des Wärmeträgermediums zwischen 60°C und 100°C, insbesondere zwischen 70°C und 80°C und in der Niedertemperatur-Destillationsanlage wird eine Betriebstemperatur zwischen 60°C und 100°C, insbesondere zwischen 70°C und 80°C eingestellt. Heutzutage sind Wasseraufbereitungsprozesse bekannt, die im Gegensatz zur konventionellen Destillation auch schon unter Atmosphärendruck bei Temperaturen von 60°C bis 70°C mit sehr guter Qualität arbeiten.

Die Erfindung basiert auf der Idee die Abwärme, die im PEM-Elektrolyseur bei der Umwandlung von elektrischer Energie in die Produkte Wasserstoff und Sauerstoff in Form von Reaktionswärme anfällt, für die Herstellung von deionisiertem Wasser zu verwenden. Für diesen Zweck ist eine Niedertemperatur-Destillationsanlage vorgesehen, die strömungstechnisch mit dem PEM-Elektrolyseur gekoppelt ist. Über ein Wärmeträgermedium, insbesondere eine Flüssigkeit, wird die Abwärme aus dem PEM-Elektrolyseur insbesondere kontinuierlich abgeführt und einem in der Niedertemperatur-Destillationsanlage integrierten Wärmetauscher zugeführt. In den Wärmetauscher wird zudem Rohwasser eingeleitet, welches im Rahmen eines thermischen Aufbereitungsprozesses mittels der Abwärme aus dem PEM-Elektrolyseur entsalzt und deionisiert wird. Das Wärmeträgermedium stellt somit eine Wärmequelle bei der Wärmeübertragung in dem Wärmetauscher dar. Der Kreislauf des Wärmeträgermediums kann sowohl offen als auch geschlossen sein.

Bei der Erfindung wurde der Synergieeffekt zwischen einem PEM-Elektrolyseur und einer Niedertemperatur-Destillationsanlage erkannt. Die entscheidende Erkenntnis ist hierbei, dass die im PEM-Elektrolyseur anfallende Abwärme deutlich größer ist als die für die Niedertemperatur-Destillationsanlage erforderliche Menge an Wärme, so dass der Eigenverbrauch an Wasser im PEM-Elektrolyseur von der Niedertemperatur-Destillationsanlage überkompensiert wird. Somit wird gewährleistet, dass ein kleiner Strom des destillierten Wassers, insbesondere 50% des frisch destillierten Wassers als Prozesswasser dem PEM-Elektrolyseur zurückgeführt wird, der größere Teil des frisch destillierten Wassers steht jedoch für weitere Prozesse zur Verfügung.

Mit Hilfe der optimalen Wärmenutzung des Elektrolysesystems wird gewährleistet, dass ausreichend Wasser für den Elektrolysebetrieb vorhanden ist sowie dass ein Industriewasserstrom hergestellt wird, der für weitere industrielle oder landwirtschaftliche Prozesse vorgesehen ist. Dies bedeutet, dass das Temperaturniveau des Wärmeträgermediums nach der Aufnahme der Abwärme aus dem PEM-Elektrolyseur ausreicht, um die Abwärme in einer Niedertemperatur-Destillationsanlage direkt nutzen zu können. Bei dem oben beschriebenen Verfahren kann die Energie für die Herstellung des destillierten Wassers, bis auf die elektrische Energie z.B. für die Pumpen, eingespart werden, da diese Energie in das Elektrolysesystem bereits eingebracht wurde, so dass der Gesamtenergiebedarf des Systems reduziert wird. Im Falle einer 1 MW Elektrolyseanlage werden z.B. im Nennbetrieb mind. 160 l entmineralisiertes bzw. deionisiertes Prozesswasser pro Stunde gebraucht. Die thermische Wasseraufbereitung besitzt einen Energieverbrauch von ca. 0,25 kWh/l, im Falle einer Membranentsalzung liegt dieser für Meerwasser bei 0,1 kWh/l. Dies bedeutet, dass unter Nutzung des Abwärmestroms des Elektrolyseurs für eine ausschließlich thermische Aufbereitungsanlage wie z.B. einer Niedertemperatur-Destillationsanlage sich bis zu 2000 l pro Stunde entsalztes Wasser dem Elektrolysesystem zuführen lassen.

Da ein Teil des in der Niedertemperatur-Destillationsanlage deionisierten Wassers dem PEM-Elektrolyseur zugeführt wird, ergibt sich zudem automatisch ein bedarfsangepasster Medienstromausgleich. Wird durch den vermehrten Eintrag von elektrischer Energie viel Prozesswasser in seine Elemente gespalten, so entsteht auch eine größere Menge an Abwärme, die wiederum in der Wasseraufbereitungsanlage zu einer erhöhten Produktion von deionisiertem Wasser führt. Zurückgeleitet kann das deionisierte Wasser den erhöhten Wasserverbrauch im PEM-Elektrolyseur decken.

Der beschriebene Vorgang weist drei wesentliche Vorteile auf. Zum einen können dank der Speicherung der Abwärme aus dem Elektrolyseprozess im Wärmeträgermedium Kosten für den Bezug von Kühlwasser oder einer Luftkühlung während des Elektrolysebetriebs eingespart werden, da die entstehende Abwärme aus dem PEM-Elektrolyseur abgeführt wird. Zum anderen wird die Abwärme bei der thermischen Wasserbehandlung in der Niedertemperatur-Destillationsanlage weiterverwendet, um deionisiertes Wasser herzustellen. Und zum dritten kann auf diese Weise so viel Rohwasser aufbereitet werden, dass nicht nur der Bedarf an Prozesswasser für den Elektrolyseprozess abgedeckt wird, sondern auch Überschuss an aufbereitetem Wasser bleibt, das anderweitig verwendet werden kann.

Vorteilhafterweise wird deionisiertes Wasser, welches im PEM-Elektrolyseur unzerlegt bleibt, als überschüssiges Prozesswasser aus dem PEM-Elektrolyseurs hinausgeleitet, wobei das überschüssige Prozesswasser dem PEM-Elektrolyseur später erneut zugeführt wird. Das überschüssige Prozesswasser kann insbesondere mit dem frisch destillierten Wasser vermischt werden, um den Prozesswasserstrom zu bilden. Zum einen, entstehen somit keine Wasserverluste, sondern das Prozesswasser wird in den PEM-Elektrolyseur zurückgeführt. Zum anderen, insbesondere relevant für Hochduck-Elektrolyseanlagen, bleibt der Druck des überschüssigen Prozesswassers erhalten, so dass nicht die Gesamtmenge an Wasser, welche dem PEM-Elektrolyseur zugeführt wird, auf hohen Druck gebracht werden muss.

Gemäß einer ersten bevorzugten Ausführungsvariante wird als Wärmeträgermedium in der Niedertemperatur-Destillationsanlage deionisiertes Wasser verwendet. Das deionisierte Wasser kann frisch deionisiertes Wasser sein, oder deionisierte Wasser, welches bereits in einem Prozess verwendet wurde, wie z.B. das überschüssige Prozesswasser.

Vorzugsweise wird das überschüssige Prozesswasser als Wärmeträgermedium verwendet. Dadurch ist insbesondere kein separates Wärmeträgermedium erforderlich, sondern das überschüssige Prozesswasser, welches nach der Elektrolyse ohnehin gekühlt werden muss, wird als unmittelbare Wärmequelle der Niedertemperatur-Destillationsanlage zugeführt. Vorzugsweise wird dabei nach der Wärmeabgabe in der Niedertemperatur-Destillationsanlage zumindest ein Teil des überschüssigen Prozesswassers, gegebenenfalls nach einem zusätzlichen Reinigungsschritt, in den PEM-Elektrolyseur zurückgeführt. Dadurch, dass das überschüssige Prozesswasser im Elektrolyseprozess wiederverwendet wird, ist eine sehr geringe Menge an frisch deionisiertem Wasser erforderlich.

Gemäß einer zweiten bevorzugten Ausführungsvariante wird das Wärmeträgermedium in einem geschlossenen Kreislauf zwischen dem PEM-Elektrolyseur und der Niedertemperatur-Destillationsanlage umgepumpt. In diesem Fall ist das Wärmeträgermedium ein anderes als das überschüssige Prozesswasser nach dem Elektrolyseprozess oder das in der Niedertemperatur-Destillationsanlage deionisierte Wasser und es erfolgt nur eine thermische Wechselwirkung zwischen den o. g. Medien. Der Hauptvorteil dieser Ausführung ist, dass die Druckregelung des Prozesswassers unabhängig vom Wärmeträgermedium-Kreislauf erfolgt, d.h. der PEM-Elektrolyseur kann problemlos unter hohem Druck betrieben werden. Ein weiterer Vorteil dieser Ausführung ist, dass der Wärmeübertragungsvorgang kontinuierlich durch eine konstante Menge an Wärmeträgermedium durchgeführt wird und ein Zulauf von zusätzlichem Wärmeträgermedium somit in der Regel nicht erforderlich ist. Als Wärmeträgermedium werden hierbei sowohl Wasser als auch geeignete Kühlmittel oder Thermoöle verwendet.

Gemäß einer dritten bevorzugten Ausführungsvariante wird als Wärmeträgermedium Rohwasser verwendet. Hierbei wird in einem ersten Verfahrensschritt Rohwasser der Niedertemperatur-Destillationsanlage zugeführt und vorgewärmt. Das vorgewärmte Wasser wird anschließend dem PEM-Elektrolyseur zugeführt, wobei es insbesondere mit dem Prozesswasser im PEM-Elektrolyseur nicht vermischt wird. Im PEM-Elektrolyseur wird das vorgewärmte Wasser insbesondere auf eine Betriebstemperatur des PEM-Elektrolyseurs erhitzt, wobei es unmittelbar die Abwärme aus dem im PEM-Elektrolyseur ablaufenden Prozess aufnimmt. Schließlich wird das erhitzte Wasser erneut dem Wärmetauscher der Niedertemperatur-Destillationsanlage zugeführt, in der nun die Deionisierung durchgeführt wird. Das frisch deionisierte Wasser (Frischwasser) als Prozesswasser dem PEM-Elektrolyseur zugeführt.

Bevorzugt wird zumindest ein Teil des in der Niedertemperatur-Destillationsanlage deionisierten Wassers remineralisiert. Durch die Remineralisierung des deionisierten Wassers kann Trinkwasser, Wasser zum Bewässern sowie Wasser für weitere industrielle Prozesse hergestellt werden.

Um den Bedarf von Industrie- oder Trinkwasser und den Bedarf von deionisiertem Wasser für den PEM-Elektrolyseur bezüglich zeitlicher Schwankungen zu entkoppeln, wird zumindest ein Teil des in der Niedertemperatur-Destillationsanlage deionisierten Wassers zwischengespeichert. Zusätzlich wird dadurch eine gewisse Unabhängigkeit von Schwankungen der Verfügbarkeit von Rohwasser erreicht.

Nach einer bevorzugten Ausführung wird als Niedertemperatur-Destillation zur Herstellung von deionisiertem Wasser Membran-Destillation angewendet. Die Membran-Destillation ist ein thermisch betriebener Separationsprozess, bei dem eine hydrophobe Membran eine Barriere für die flüssige Phase eines Wasserstroms darstellt, während die dampfförmige Phase die Membran durchdringt. Die treibende Kraft für den Prozess bildet ein Partialdampfdruckgefälle, welches üblicherweise durch eine Temperaturdifferenz hervorgerufen wird.

Vorzugsweise wird der PEM-Elektrolyseur unabhängig von einer Trinkwasserversorgung betrieben. Hierbei ist das Rohwasser kein Trinkwasser, sondern die Elektrolyse findet abseits von einem Anschluss an einer hochwertigen Trinkwasser-Versorgung statt. Mit Trinkwasserversorgung ist hier eine Leitungswasserversorgung bezeichnet, die insbesondere von einem lokalen Wasserversorger zur Verfügung gestellt wird.

Im Hinblick auf einen autarken Betrieb des PEM-Elektrolyseurs wird zweckdienlicherweise als Rohwasser der Niedertemperatur-Destillationsanlage Meerwasser, industrielles oder kommunales Abwasser (z.B. aus einer Kläranlage) oder Brackwasser zugeführt. Dadurch werden auch die Infrastrukturvoraussetzungen für eine autarke Elektrolyseanlage erfüllt. Es werden dabei auch "schlechte" Wasserquellen zur Versorgung des PEM-Elektrolyseurs nutzbar gemacht. Der Elektrolyseprozess produziert ausreichend Abwärme, um so viel deionisiertes Wasser aus einer Rohwasserquelle aufzubereiten, dass nicht nur der PEM-Elektrolyseur komplett damit versorgt werden kann, sondern hochreines Wasser nach entsprechender Konditionierung für die Trinkwasserversorgung zur Verfügung stellt. Darüber hinaus produziert eine Technologie der Niedertemperatur-Destillation, wie z.B. Membran-Destillation, Wasser mit so hohem Reinheitsgrad (Salinität < 10 ppm), das im Gegensatz zur Verwendung von Trinkwasser eine weitere Vorkonditionierung vor dem Einsatz im PEM-Elektrolyseur nicht notwendig ist. Es gibt bereits Erfahrungen mit diesen Technologien bei der Aufbereitung von Meerwasser, Brackwasser sowie Prozesswasser in verschiedenen Industrien, so dass diese Prozesse auf eine breite Palette an Rohwasserquellen angewendet werden können.

In der Regel wird die Verlustwärme des PEM-Elektrolyseurs durch Zwangskühlung abgeführt. Dafür sind entsprechende Kühlflächen an einer Kühlvorrichtung vorgesehen. Vorteilhafterweise wird eine Kühlung des überschüssigen Prozesswassers in einer Kühlvorrichtung des PEM-Elektrolyseurs durchgeführt, die in der Niedertemperatur-Destillationsanlage integriert ist. Indem die Kühlvorrichtung einen integralen Bestandteil der Niedertemperatur-Destillationsanlagen bildet, wird der zusätzliche Vorteil erzielt, dass das investierte Kapital besser genutzt wird. Die Niedertemperatur-Destillationsanlage kann dabei insbesondere durch eine Nachrüstung der Kühlvorrichtung eines bestehenden PEM-Elektrolyseurs aufgebaut werden.

Vorzugsweise wird die Menge des aufbereiteten Rohwassers in Abhängigkeit von der Menge an Abwärme aus dem PEM-Elektrolyseur geregelt. Dadurch wird gewährleistet, dass dem PEM-Elektrolyseur ausreichend Frischwasser zugeführt wird, so dass die erzeugte Abwärme abgeführt wird und dabei die Temperatur im PEM-Elektrolyseur innerhalb eines für den Elektrolyseprozess sinnvollen Temperaturbereichs insbesondere konstant bleibt.

Nach einer bevorzugten Ausführungsvariante wird ein Zulauf von Rohwasser in Abhängigkeit der Temperatur in der Niedertemperatur-Destillationsanlage gesteuert oder geregelt. Hierfür wird die Temperatur in der Niedertemperatur-Destillationsanlage mit Hilfe von Temperatursensoren gemessen. Der Rohwasserzulauf wird derart geregelt, dass die Betriebstemperatur in der Niedertemperatur-Destillationsanlage einen Minimalwert, der für die Destillation des Rohwassers erforderlich ist, nicht unterschreitet und gegebenenfalls unterhalb eines Maximalwertes bleibt, bei dem die Qualität der Wasserreinigung abnimmt. Der Minimalwert hängt von der Auslegung der Niedertemperatur-Destillationsanlage ab, wobei je niedriger der Minimalwert ist, desto größer ist der erforderliche Volumenstrom an Wärmeträgermedium. Der Minimalwert sollte insbesondere 60° nicht unterschreiten. Der Maximalwert hängt wiederum von den im Rohwasser vorhandenen Verunreinigungen und deren Dampfdrücken als Funktion der Temperatur ab. Der Maximalwert kann dabei insbesondere höchstens so groß sein wie die Temperatur auf der Primärseite des Wärmetauschers (wenn keine zusätzlichen Heizvorrichtungen vorgesehen sind).

Nach einer weiteren bevorzugten Ausführungsvariante wird ein Durchsatz des Wärmeträgermediums in Abhängigkeit von einer Betriebstemperatur im PEM-Elektrolyseur gesteuert. Auch hierfür sind Temperatursensoren vorgesehen, die die Betriebstemperatur im PEM-Elektrolyseur insbesondere kontinuierlich messen. Bei Abweichungen der Temperatur im PEM-Elektrolyseur von der gewünschten Betriebstemperatur wird der Fluss des Wärmeträgermediums entsprechend angepasst.

Zusätzlich zu den Temperatursensoren können auch geeignete elektrochemische Sensoren vorgesehen sein, welche die Wasserqualität des in der Niedertemperatur-Destillationsanlage destillierten Wassers überwachen.

Ausführungsbeispiele der Erfindung werden anhand einer Zeichnung näher erläutert. Hierin zeigen schematisch und stark vereinfacht:
- FIG 1: ein erstes Ausführungsbeispiel eines Elektrolysesystems,
- FIG 2: ein zweites Ausführungsbeispiel eines Elektrolysesystems, und
- FIG 3: ein drittes Ausführungsbeispiel eines Elektrolyse-systems.

Gleiche Bezugszeichen haben in den verschiedenen Figuren die gleiche Bedeutung.

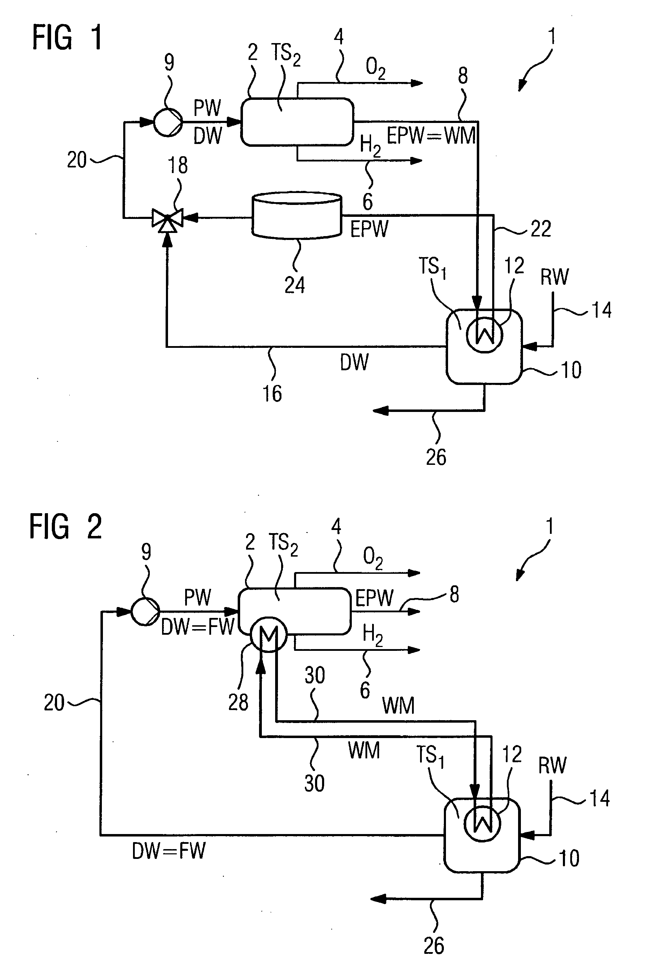

In FIG 1 ist ein Elektrolysesystem 1 umfassend einen PEM-Elektrolyseur 2 zum Erzeugen von Wasserstoff H₂ und Sauerstoff O₂ gezeigt. Im gezeigten Ausführungsbeispiel erfolgt eine Hochdruck-Elektrolyse. Es ist jedoch auch möglich den PEM-Elektrolyseur 2 bei atmosphärischem Druck zu betreiben.

Bestandteil eines PEM-Elektrolyseurs 2 ist eine hier nicht näher gezeigte protonendurchlässige Polymermembran (Proton-Exchange-Membrane), die auf beiden Seiten von mit Katalysator belegten Elektroden (Anode, Kathode) kontaktiert wird. An diese wird eine äußere Spannung angelegt und auf der Anodenseite des PEM-Elektrolyseurs 2 wird Wasser zugeführt. Beim Zersetzen des Wassers entstehen Sauerstoff, Elektronen und positiv geladene Wasserstoff-Ionen. Die Wasserstoff-Ionen diffundieren durch die protonenleitende Membran auf die Kathodenseite, wo sie mit den Elektronen aus dem äußeren Stromkreis zu Wasserstoffmolekülen H₂ kombinieren. Jedes der erzeugten Produktgase H₂ und O₂ wird in einer eigenen Gasableitung 4, 6 aus dem PEM-Elektrolyseur 2 abgeführt.

Der Elektrolyseprozess wird in FIG 1 über eine Hochdruckpumpe 9 mit dem benötigten Prozesswasser PW versorgt. Es handelt sich hierbei um vollentsalztes, destilliertes Wasser mit einer Leitfähigkeit kleiner 1 µS. Der Anoden- oder Sauerstoffseitige Wasserkreislauf umspült die Membran, versorgt den elektrochemischen Prozess mit dem benötigten Wasser, das zersetzt wird, und führt neben der entstehenden Reaktionswärme auch das produzierte Sauerstoffgas ab.

Das überschüssige Prozesswasser EPW, welches beim Elektrolyseprozess nicht zersetzt ist, wird mit Hilfe einer Prozesswasserableitung 8 aus dem PEM-Elektrolyseur 2 abgeführt, da die Betriebstemperatur des polymerbasierten PEM-Elektrolyseurs 2 auf einen Temperaturbereich von 50°C bis 130°C beschränkt ist und somit eine kontinuierliche Abführung der im PEM-Elektrolyseur 2 entstehenden Reaktionswärme notwendig ist. Die Prozesswasserableitung 8 ist dabei Teil eines Prozesswasserkreislaufs für den PEM-Elektrolyseur 2.

Das Elektrolysesystem 1 gemäß FIG 1 umfasst zusätzlich eine Niedertemperatur-Destillationsanlage 10. Die Niedertemperatur-Destillationsanlage 10 weist einen Wärmetauscher 12 auf, in den primärseitig das überschüssige Prozesswasser EPW aus dem PEM-Elektrolyseur 2 über die Prozesswasserableitung 8 eingeleitet wird. Über eine Rohwasserleitung 14 wird der Niedertemperatur-Destillationsanlage 10 Rohwasser RW, insbesondere aus einer natürlichen Quelle wie z.B. Meerwasser, Brackwasser oder Seewasser, zugeführt. Über die Rohwasserleitung 14 kann alternativ auch Wasser aus einer industriellen Anlage, kommunales Abwasser aus einer Kläranlage oder auch Trink- oder Leitungswasser zugeführt werden.

Die Niedertemperatur-Destillationsanlage 10 ist z.B. eine Membran-Destillationsanlage, bei der dem überschüssigen Prozesswasser EPW die Wärme entzogen und zur Aufbereitung des sekundärseitigen Rohwassers RW verwendet wird. Das überschüssige Prozesswasser EPW stellt somit im Ausführungsbeispiel gemäß FIG 1 ein Wärmeträgermedium WM dar. In der Niedertemperatur-Destillationsanlage 10 wird dabei die im Wärmeträgermedium WM gespeicherte Abwärme aus dem Elektrolyseprozess dem Rohwasser RW zur Herstellung von frisch deionisiertem Wasser FM abgegeben.

Das in der Aufbereitungsanlage 10 entsalzte und destillierte Wasser DW wird anschließend über eine Deionat-Leitung 16 aus der Niedertemperatur-Destillationsanlage 10 hinausgeleitet und in zwei Ströme geteilt: einen Frischwasserstrom, der über ein Ventil 18 einer Versorgungsleitung 20 des PEM-Elektrolyseurs 2 zugeführt wird, und einen Industriewasserstrom IW, der aus dem Elektrolysesystem 1 hinausgeleitet wird. Über das Ventil 18 wird Prozesswasser PW, das sich aus dem Frischwasser FW und aus dem gekühlten überschüssigen Prozesswasser EPW zusammensetzt, geregelt. Das abgekühlte überschüssige Prozesswasser EPW wird über eine Leitung 22 zunächst in einen Wassertank 24 befördert, von wo aus es insbesondere nach einem Reinigungsschritt ebenfalls über das Ventil 18 der Versorgungsleitung 20 in den PEM-Elektrolyseur 2 eingepumpt wird. Parallel wird über eine Ableitung 26 das beim Destillieren des Rohwassers RW anfallende Abwasser-Konzentrat aus der Niedertemperatur-Destillationsanlage 10 entsorgt.

In FIG 1 ist der Wassertank 24 lediglich für das überschüssige Prozesswasser EPW, welches beim Elektrolyseprozess wieder verwendet wird, vorgesehen, während das Frischwasser FW insbesondere kontinuierlich dem PEM-Elektrolyseur 2 zugeführt wird. Es ist jedoch möglich, auch destilliertes Wasser DW in der Deionat-Leitung 16 zunächst zu speichern, bevor es geteilt wird, oder auch den Frischwasserstrom FW zu speichern, bevor der dem PEM-Elektrolyseur 2 zugeführt wird.

Die in der Niedertemperatur-Destillationsanlage 10 herrschende Betriebstemperatur beträgt z.B. insbesondere 70°C. Aufgrund der Art der Niedertemperatur-Destillationsanlage 10 ist diese Temperatur jedoch ausreichend, um das Rohwasser RW aus der Leitung 14 derart aufzubereiten, dass es sich als Prozesswasser PW für den Elektrolyseprozess eignet.

Über einen ersten Temperatursensor TS₁ wird kontinuierlich die Temperatur in der Niedertemperatur-Destillationsanlage 10 gemessen. In Abhängigkeit dieser Temperatur wird dabei der Rohwasserzulauf RW geregelt. Hierfür sind in Bezug auf die gemessene Temperatur eine untere und eine obere Grenze bzw. ein Minimalwert und ein Maximalwert zu berücksichtigen. Wenn die Temperatur den Minimalwert von ca. 60°C erreicht hat oder unterhalb des Minimalwertes liegt, wird der Rohwasserzulauf RW reduziert oder gar unterbrochen. Bei einem deutlichen Anstieg der Temperatur in der Niedertemperatur-Destillationsanlage 10 wird der Rohwasserzulauf RW dagegen erhöht. Der Maximalwert für die Temperatur in der Niedertemperatur-Destillationsanlage 10 wird so festgelegt, dass das Destillat die Anforderungen an die geforderte Reinheit noch erfüllt. Bei Salzwasser ohne weitere Verunreinigungen sind Temperaturen bis 90°C tolerabel, bei Wässern mit öligen Verunreinigungen können Temperaturen unter 80°C erforderlich sein.

Ein ähnlicher Regelungsvorgang findet auch im PEM-Elektrolyseur 2 statt, dessen Betriebstemperatur durch einen weiteren Temperatursensor TS₂ gemessen wird. Der Zufluss an deionisiertem Wasser DW, weiterhin auch als Deionat bezeichnet, in den PEM-Elektrolyseur 2 wird so geregelt, dass die Betriebstemperatur im PEM-Elektrolyseur 2 einen vorgegebenen Wert, der einen einwandfreien Betrieb des PEM-Elektrolyseurs 2 gewährleistet, nicht übersteigt.

Weiterhin wird der Rohwasserzulauf RW in Abhängigkeit von der Menge an Abwärme aus dem PEM-Elektrolyseur 2 geregelt. Wird im PEM-Elektrolyseur 2 immer mehr Prozesswasser PW in seine Elemente gespalten, so entsteht auch eine vergrößerte Menge an Abwärme. Diese Abwärme führt in der Niedertemperatur-Destillationsanlage 10 wiederum zu einer erhöhten Produktionsrate an Deionat DW, welches in den PEM-Elektrolyseur 2 eingeleitet wird und dort den erhöhten Wasserverbrauch decken kann.

Eine zweite Ausführungsvariante eines Elektrolysesystems 1 ist aus FIG 2 ersichtlich. Der wesentliche Unterschied im Vergleich zur Anordnung gemäß FIG 1 ist, dass bei der zweiten Ausführungsvariante ein geschlossener Kreislauf für das Wärmeträgermedium WM vorgesehen ist. Hierfür umfasst auch der PEM-Elektrolyseur 2 einen Wärmetauscher 28. Das Wärmeträgermedium WM, welches hierbei sowohl Kühlwasser als auch ein anderes Kühlmittel sein kann, wird in den Wärmetauscher 28 des PEM-Elektrolyseurs 2 eingepumpt und speichert dort die Abwärme des Elektrolyseprozesses ab, wobei sich das Wärmeträgermedium WM auf eine Temperatur zwischen 50°C und 100°C aufheizt, wenn das Wärmeträgermedium WM unter Druck ist, kann seine Temperatur auch bis zu 130°C betragen. Über eine Kreislaufleitung 30 wird das aufgeheizte Wärmeträgermedium WM dem Wärmetauscher 12 der Niedertemperatur-Destillationsanlage 10 zugeführt und gibt seine Wärme an das Rohwasser RW ab. Das Rohwasser RW unterliegt in der Niedertemperatur-Destillationsanlage 10 einem Verdunstungsvorgang sowie einem anschließenden Kondensationsvorgang, wobei Deionat DW hergestellt wird, ein Teil von welchem als Frischwasser FW über die Versorgungsleitung 20 direkt in den PEM-Elektrolyseur 2 eingeleitet wird und ein anderer Teil als Industriewasser IW außerhalb des Elektrolysesystems 1 weiterverwendet wird. Das Abwasser-Konzentrat, das beim Destillationsprozess zurückbleibt, wird über die Ableitung 26 z.B. ins Meer zurückgeführt.

Auch beim Elektrolysesystem 1 gemäß FIG 2 wird die Betriebstemperatur im PEM-Elektrolyseur 2 mittels des Temperatursensors TS₂ gemessen und entsprechend wird der Kreislauf für das Wärmeträgermedium WM sowie der Rohwasserzulauf RW gesteuert bzw. geregelt.

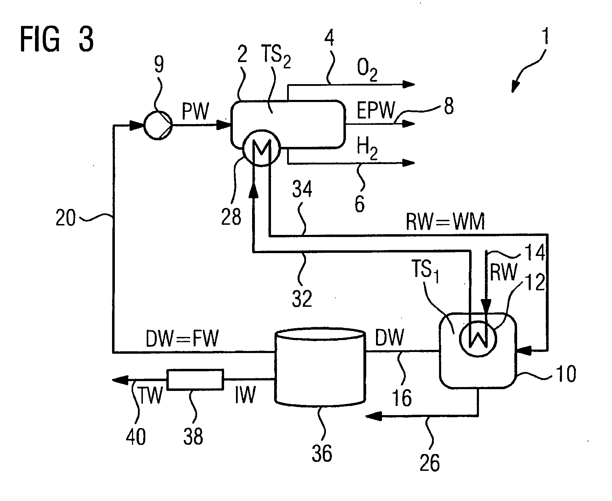

Ein drittes Ausführungsbeispiel für die Anordnung und die strömungstechnische Verbindung des PEM-Elektrolyseurs 2 mit der Niedertemperatur-Destillationsanlage 10 ist in FIG 3 gezeigt. Gemäß FIG 3 wird über die Rohwasserleitung 14 als Rohwasser RW z.B. Meerwasser mit einer Temperatur unterhalb 20°C zugeführt. In dem Wärmetauscher 12 wird das Rohwasser RW vorgewärmt und anschließend wird es über eine Leitung 32 dem zweiten Wärmetauscher 28, der dem PEM-Elektrolyseur 2 zugeordnet ist, zugeführt. Im Wärmetauscher 28 wird das Rohwasser RW aufgrund der Abwärme, die beim Elektrolyseprozess entsteht, erhitzt und über die Warmwasserleitung 34 zurück in die Niedertemperatur-Destillationsanlage 10 geführt. Erst in der Niedertemperatur-Destillationsanlage 10 in Kontakt mit Luft verdunstet das aufgeheizte Rohwasser RW in einem Verdunster und anschließend kondensiert es, so dass Deionat DW entsteht, welches über die Deionat-Leitung 16 aus der Niedertemperatur-Destillationsanlage 10 hinausgeführt wird.

Das deionisierte Wasser oder Deionat DW wird im gezeigten Ausführungsbeispiel zunächst in einem Wassertank 36 zwischengespeichert. Über die Versorgungsleitung 20 wird ein kleiner Teil des deionisierten Wassers DW als Frischwasser FW zurück in den PEM-Elektrolyseur 2 gepumpt. Ein anderer Teil des deionisierten Wassers DW bilden den Industriewasserstrom IW und wird remineralisiert, indem es z.B. einem Kiesbett 38 zugeführt wird, so dass Trinkwasser TW hergestellt wird, welches über eine Trinkwasserleitung 40 in das städtische Trinkwasser-Versorgungsnetz eingeleitet wird oder alternativ für weitere industrielle Prozesse verwendet wird. Möglich ist auch, dass das in der Aufbereitungsanlage 10 deionisierte Wasser DW in einen Frischwasserstrom FW und einen Industriewasserstrom IW geteilt wird, ohne dass das Deionat DW in einem Wassertank 36 zwischengespeichert wird. Anstelle der Remineralisierung im Kiesbett 38 kann außerdem eine andere Art von Aufbereitung des deionisierten Wassers DW stattfinden, so dass sich dieser Wasserstrom zumindest als Prozesswasser in einem anderen industriellen Prozess eignet.

Auch bei der Anordnung gemäß FIG 3 erfolgt eine Temperaturmessung in der Niedertemperatur-Destillationsanlage 10 sowie im PEM-Elektrolyseur 2 und auf Grundlage der gemessenen Werte wird der Rohwasserzufluss RW geregelt (in diesem Fall stellt das Rohwasser RW auch das Wärmeträgermedium WM für die Abfuhr der Abwärme aus dem PEM-Elektrolyseur 2 dar).

Die Elektrolysesysteme 1 gemäß FIG 1 bis FIG 3 zeichnen sich alle dadurch aus, dass sie autark in Bezug auf eine Trinkwasserversorgung sind. Sie eignen sich somit für einen sogenannten Inselbetrieb. Insbesondere in den Fällen, in denen ein Teil des deionisierten Wassers DW weiter verarbeitet wird (Remineralisierung) kann die Abwärmenutzung aus dem PEM-Elektrolyseur 2 zur Entsalzung von Meerwasser und Herstellung von Trinkwasser TW in wasserarmen Gegenden in Küstennähe benutzt werden.

## Patentansprüche

1. Verfahren zum Betrieb eines Elektrolysesystems (1) zum Erzeugen von Wasserstoff und Sauerstoff durch Zerlegung von Wasser in einem PEM-Elektrolyseur (2), wobei
- dem PEM-Elektrolyseur Prozesswasser (PW) zugeführt wird,
- Abwärme, die im PEM-Elektrolyseur (2) beim Zerlegen des Prozesswassers (PW) erzeugt wird, in einem Wärmeträgermedium (WM) gespeichert wird,
- das Wärmeträgermedium (WM) einer Niedertemperatur-Destillationsanlage (10) zugeführt wird, und
- in der Niedertemperatur-Destillationsanlage (10) mittels der Abwärme aus Rohwasser (RW) deionisiertes Wasser (DW) unter Atmosphärendruck bei Betriebstemperaturen zwischen 60° und 70° hergestellt wird, wobei
- lediglich ein Teil, insbesondere weniger als 50% des deionisierten Wassers (DW) als Prozesswasser (PW) dem PEM-Elektrolyseur (2) zugeführt wird, und
- ein Industriewasserstrom (IW), der insbesondere mehr als 50% des deionisierten Wassers (DW) umfasst, nach der Niedertemperatur-Destillationsanlage (10) und vor dem PEM-Elektrolyseurs (2) aus dem Elektrolysesystem (1) hinausgeleitet wird.

2. Verfahren nach Anspruch 1,
wobei Prozesswasser (PW), welches im PEM-Elektrolyseur (2) unzersetzt bleibt, als überschüssiges Prozesswasser (EPW) aus dem PEM-Elektrolyseur (2) hinausgeleitet wird, wobei das überschüssige Prozesswasser (EPW) dem PEM-Elektrolyseur (2) erneut zugeführt wird.

3. Verfahren nach einem der vorhergehenden Ansprüche,
wobei als Wärmeträgermedium (WM) in der Niedertemperatur-Destillationsanlage (10) deionisiertes Wasser (DW) verwendet wird.

4. Verfahren nach Anspruch 2,
wobei überschüssige Prozesswasser (EPW) als Wärmeträgermedium (WM) verwendet wird.

5. Verfahren nach einem der vorhergehenden Ansprüche,
wobei das Wärmeträgermedium (WM) in einem geschlossenen Kreislauf (30) zwischen dem PEM-Elektrolyseur (2) und der Niedertemperatur-Destillationsanlage (10) umgepumpt wird.

6. Verfahren nach einem der vorhergehenden Ansprüche,
wobei als Wärmeträgermedium (WM) Rohwasser (RW) verwendet wird.

7. Verfahren nach einem der vorhergehenden Ansprüche,
wobei zumindest ein Teil des Industriewasserstroms (IW) remineralisiert wird.

8. Verfahren nach einem der vorhergehenden Ansprüche,
wobei das in der Niedertemperatur-Destillationsanlage (10) deionisierte Wasser (DW) zwischengespeichert wird.

9. Verfahren nach einem der vorhergehenden Ansprüche,
wobei zur Herstellung von deionisiertem Wasser (DW) in der Niedertemperatur-Destillationsanlage (10) Membran-Destillation angewendet wird.

10. Verfahren nach einem der vorhergehenden Ansprüche,
wobei der PEM-Elektrolyseur (2) unabhängig von einer Trinkwasserversorgung betrieben wird.

11. Verfahren nach einem der vorhergehenden Ansprüche,
wobei der Niedertemperatur-Destillationsanlage (10) als Rohwasser (RW) Meerwasser, industrielles oder kommunales Abwasser oder Brackwasser zugeführt wird.

12. Verfahren nach einem der vorhergehenden Ansprüche,
wobei ein Zulauf des Rohwassers (RW) in Abhängigkeit der Temperatur in der Niedertemperatur-Destillationsanlage (10) geregelt wird.

13. Verfahren nach einem der vorhergehenden Ansprüche 2 bis 12,
wobei eine Kühlung des überschüssigen Prozesswassers (EPW) in einer Kühlvorrichtung (12) des PEM-Elektrolyseurs (2) durchgeführt wird, die in der Niedertemperatur-Destillationsanlage (10) integriert ist.

14. Verfahren nach einem der vorhergehenden Ansprüche,
wobei die Menge des aufbereiteten Rohwassers (RW) in Abhängigkeit von der Menge an Abwärme aus dem PEM-Elektrolyseur (2) geregelt wird.

15. Verfahren nach einem der vorhergehenden Ansprüche,
wobei ein Durchsatz des Wärmeträgermediums (WM) in Abhängigkeit einer Betriebstemperatur des PEM-Elektrolyseurs (2) geregelt wird.

## Claims

1. Method for operating an electrolysis system (1) for generating hydrogen and oxygen by breaking down water in a PEM electrolyser (2), wherein
- process water (PW) is supplied to the PEM electrolyser,
- waste heat which is generated in the PEM electrolyser (2) during the breakdown of the process water (PW) is stored in a heat transfer medium (WM),
- the heat transfer medium (WM) is supplied to a low temperature distillation system (10), and
- deionised water (DW) is produced under atmospheric pressure at operating temperatures between 60° and 70° in the low temperature distillation system (10) using the waste heat from raw water (RW), wherein
- only one part, in particular less than 50% of the deionised water (DW) is supplied to the PEM electrolyser (2) as process water (PW), and
- an industrial water flow (IW), which includes in particular more than 50% of the deionised water (DW), is routed out of the electrolysis system (1) downstream of the low temperature distillation system (10) and upstream of the PEM electrolyser (2).

2. Method according to claim 1,
wherein process water (PW), which is not broken down in the PEM electrolyser (2), is routed out of the PEM electrolyser (2) as excess process water (EPW), wherein the excess process water (EPW) is supplied again to the PEM electrolyser (2).

3. Method according to one of the preceding claims, wherein deionised water (DW) is used as a heat transfer medium (WM) in the low temperature distillation system (10).

4. Method according to claim 2,
wherein excess process water (EPW) is used as a heat transfer medium (WM).

5. Method according to one of the preceding claims,
wherein the heat transfer medium (WM) is pumped around in a closed circuit (30) between the PEM electrolyser (2) and the low temperature distillation system (10).

6. Method according to one of the preceding claims, wherein raw water (RW) is used as the heat transfer medium (WM).

7. Method according to one of the preceding claims, wherein at least one part of the industrial water flow (IW) is remineralised.

8. Method according to one of the preceding claims, wherein the deionised water (DW) in the low temperature distillation system (10) is stored temporarily.

9. Method according to one of the preceding claims, wherein membrane distillation is used to produce deionised water (DW) in the low temperature distillation system (10).

10. Method according to one of the preceding claims, wherein the PEM electrolyser (2) is operated independently of a drinking water supply.

11. Method according to one of the preceding claims, wherein seawater, industrial or communal waste water or brackish water is supplied as raw water (RW) to the low temperature distillation system (10).

12. Method according to one of the preceding claims, wherein an intake of the raw water (RW) is regulated as a function of the temperature in the low temperature distillation system (10).

13. Method according to one of the preceding claims 2 to 12, wherein the excess process water (EPW) is cooled in a cooling apparatus (12) of the PEM electrolyser, which is integrated in the low temperature distillation system (10).

14. Method according to one of the preceding claims, wherein the quantity of prepared raw water (RW) is regulated as a function of the quantity of waste heat from the PEM electrolyser (2).

15. Method according to one of the preceding claims, wherein a flow-rate of the heat transfer medium (WM) is regulated as a function of an operating temperature of the PEM electrolyser (2).

## Revendications

1. Procédé pour faire fonctionner un système (1) d'électrolyse pour produire de l'hydrogène et de l'oxygène par décomposition d'eau dans un électrolyseur PEM ( 2 ), dans lequel
- on envoie de l'eau ( PW ) de processus à l'électrolyseur PEM ( 2 ),
- on emmagasine dans un milieu ( WM ) caloporteur de la chaleur perdue, qui est produite dans l'électrolyseur PEM ( 2 ) lors de la décomposition de l'eau ( PW ) de processus,
- on envoie le milieu ( WM ) caloporteur à une installation ( 10 ) de distillation à basse température et
- dans l'installation ( 10 ) de distillation à basse température, on produit sous la pression atmosphérique, à des températures de fonctionnement comprises entre 60° et 70° à l'aide de la chaleur perdue de l'eau ( DW ) déminéralisée à partir d'eau ( RW ) brute, dans lequel
- on envoie à l'électrolyseur PEM ( 2 ) comme eau ( PW ) de processus seulement une partie, notamment moins de 50 %, de l'eau ( DW ) déminéralisée et
- on fait sortir du système ( 1 ) d'électrolyse, après l'installation ( 10 ) de distillation à basse température et avant l'électrolyseur PEM ( 2 ), un courant ( IW ) d'eau industrielle qui comprend notamment plus de 50 % de l'eau ( DW ) déminéralisée.

2. Procédé suivant la revendication 1,
dans lequel on fait sortir de l'électrolyseur PEM ( 2 ), comme eau ( EPW ) de processus en excès, de l'eau ( PW ) de processus qui reste sans avoir été décomposée dans l'électrolyseur PEM ( 2 ), l'eau ( EPW ) de processus en excès étant envoyée à nouveau à l'électrolyseur PEM ( 2 ).

3. Procédé suivant l'une des revendications précédentes,
dans lequel on utilise de l'eau ( DW ) déminéralisée comme milieu ( WM ) caloporteur dans l'installation ( 10 ) de distillation à basse température.

4. Procédé suivant la revendication 2,
dans lequel on utilise comme milieu ( WM ) caloporteur de l'eau ( EPW ) de processus en excès.

5. Procédé suivant l'une des revendications précédentes,
dans lequel on fait recirculer par pompage le milieu ( WM ) caloporteur en un circuit ( 30 ) fermé entre l'électrolyseur PEM ( 2 ) et l'installation ( 10 ) de distillation à basse température.

6. Procédé suivant l'une des revendications précédentes,
dans lequel on utilise de l'eau ( RW ) brute comme milieu ( WM ) caloporteur.

7. Procédé suivant l'une des revendications précédentes,
dans lequel on reminéralise au moins une partie du courant ( IW ) d'eau industrielle.

8. Procédé suivant l'une des revendications précédentes,
dans lequel on stocke intermédiairement de l'eau ( DW ) déminéralisée dans l'installation ( 10 ) de distillation à basse pression.

9. Procédé suivant l'une des revendications précédentes,
dans lequel on applique une distillation à membrane pour la production d'eau ( DW ) déminéralisée dans l'installation ( 10 ) de distillation à basse température.

10. Procédé suivant la revendication 1,
dans lequel on fait fonctionner l'électrolyseur PEM ( 2 ) indépendamment d'une alimentation en eau potable.

11. Procédé suivant l'une des revendications précédentes,
dans lequel on envoie à l'installation ( 10 ) de distillation à basse température comme eau ( RW ) brute de l'eau de mer, des eaux résiduaires industrielles ou des eaux d'égout communales ou de l'eau saumâtre.

12. Procédé suivant l'une des revendications précédentes,
dans lequel on régule une arrivée de l'eau ( RW ) brute en fonction de la température dans l'installation ( 10 ) de distillation à basse température.

13. Procédé suivant l'une des revendications précédentes 2 à 12,
dans lequel on effectue un refroidissement de l'eau ( EPW ) de processus en excès dans un dispositif ( 12 ) de refroidissement de l'électrolyseur PEM ( 2 ) qui est intégré à l'installation ( 10 ) de distillation à basse température.

14. Procédé suivant l'une des revendications précédentes,
dans lequel on régule la quantité d'eau ( RW ) brute préparée en fonction de la quantité de chaleur perdue de l'électrolyseur PEM ( 2 ).

15. Procédé suivant l'une des revendications précédentes,
dans lequel on régule un débit du milieu ( WM ) caloporteur en fonction d'une température de fonctionnement de l'électrolyseur PEM ( 2 ).
